# EUROPEAN PATENT APPLICATION

(11) **EP 1 149 762 A1**
(43) Date of publication of application: **31.10.2001**
(21) Application number: 00830310.9
(22) Date of filing: 27.04.2000
(51) Int. Cl.: B64D 17/38, F16B 45/02, F16B 45/04, A62B 1/04, B64C 31/028

(54) **Rapidly releasable karabiner safety device**

(71) Applicant: Aludesign S.r.l., 24034 Cisano Bergamasco (BG) (IT)
(72) Inventor: Maruelli, Stefano, 10016 Montalto Dora (TO) (IT)
(74) Representative: Marietti, Giuseppe

(57) **Abstract**

The invention concerns a rapidly releasable safety karabiner (1) comprising a fixed body (2) and a mobile element (3) hooked up to said fixed body by means of a transverse pin (4). The external forces applied to the karabiner are almost completely discharged onto support elements (12a,12b) set on the fixed body, constituted by two surfaces of contact that create a reaction substantially similar in magnitude and directed almost parallel to the applied load. Only the small remaining component of load bears on the transverse pin, sufficient to release the mobile part from the surfaces of support once the transverse pin is removed.

## Description

The present invention relates to a rapidly releasable device for suspended elements or subjects.

In particular, the invention relates to a karabiner usable in several activities such as, for instance: parachuting, hang-gliding and para-gliding and, in general, in those activities that make use of suspension systems in which the rapidly release of suspended elements could become necessary

Rapidly releasable systems are known that normally link the load directly to the mobile elements loading the binders, unlocking one of which makes it possible to separate the different parts of the system. These systems present numerous drawbacks due to the fact that in case of incomplete closure of the locking system, the load that tends to open the system concentrates on the portion of the binders still present thus creating a dangerous situation where there is a risk of the structure collapsing or of the lock opening due to deformation.

Furthermore, the known devices often require complex unlocking operations, sometimes even a sequence of several movements, therefore making them ineffective in emergencies in which rapid release is necessary.

The present invention is proposed to overcome these drawbacks through a new system of rapid release that allows immediate separation of the two parts and the consequent liberation of the hooked up subject, due to a particular distribution of the forces that act on the system achieved by the original shape of the karabiner of the invention.

In detail, the object of the invention is a rapidly releasable safety karabiner which comprises a fixed body and a mobile element attached to the said fixed body by means of a transverse pin, all so shaped that the external forces applied to the karabiner are almost completely offloaded onto support elements on the fixed body, said supporting elements being constituted by two contact surfaces made in such a way as to create a binding reaction substantially similar in magnitude and directed almost parallel to the applied load, thus leaving only the remaining minor component of the load bearing on the transverse pin and generating a force sufficient to disengage the mobile part from the contacting surface once the transverse pin has been removed.

As a result of this distribution of forces, the transverse pin that holds the fixed body and the mobile element together carries only a small part of the load and it can be extracted by exerting a light effort such as that produced by the arm of the subject who is hooked up and suspended, whatever the load weighing on the karabiner is.

The mobile element is shaped in such a way as to accept and retain an anchorage element in position, such as for instance a carrying-strap that constitutes the point of hookup of the suspended load. Said anchorage element is of such dimension as to be easily inserted into - or disconnected from - the mobile element.

According to a preferred solution, the upper part of the fixed body results arched in the third dimension in such a way as to constitute a support for the anchorage element connected to the mobile part and to generate a transverse component of force on the pin in order to cause a rapid release at the moment of the removal of said pin.

According to another preferred embodiment of the invention, the mobile element is connected to the anchorage element by an elastic chord or analogous device to prevent the separation of the two parts in order to prevent its loss during emergency release.

According to a preferred embodiment of the invention, the transverse pin is equipped with a ring which is connected to a flexible element of prolongation, such as a clearly-visible chord, ribbon or tape, to make it easy to grip and easy for the hooked-up subject to grab, even when wearing thick gloves.

The arrangement of the pin is such that it can be extracted by grabbing the flexible extension and pulling it in the direction of free movement of the arm, therefore in an instinctive and effective way.

Furthermore, the transverse pin could be equipped with safety devices against its accidental removal, for instance it could be fitted with one or more spring elements, engaging on shaped grooves that expand into cut-outs on the mobile element, allowing the pin to slide only when specific loads are present.

According to another aspect of the invention, the karabiner could comprise additional safety devices or measures against accidental opening and incomplete closure.

The invention will now be described in more detail with reference to the enclosed sketches that are by way of example and not limiting.

Figure 1 is a prospective view of a karabiner according to the invention connected to an anchorage element and with the rapidly releasable system in position.

Figure 1b is a prospective view of a karabiner according to the invention also fitted with a safety system against accidental opening and incomplete closure.

Figures 1c, 1d and 1e show details of the karabiner also fitted with a safety system against accidental opening and incomplete closure.

Figures 2, 3 and 4 illustrate examples of sequences of rapid release of a subject hooked up and suspended by one or more karabiners produced according to the invention.

With reference to the figures attached to the description for facilitating the understanding of the invention, the claimed object is a karabiner as described in Claims from 1 to 17

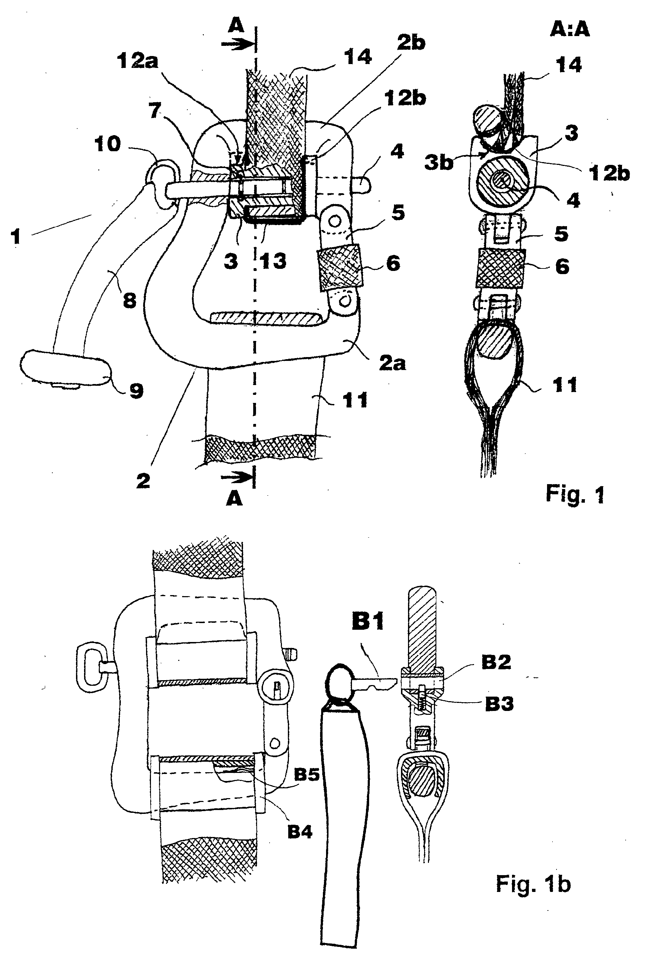

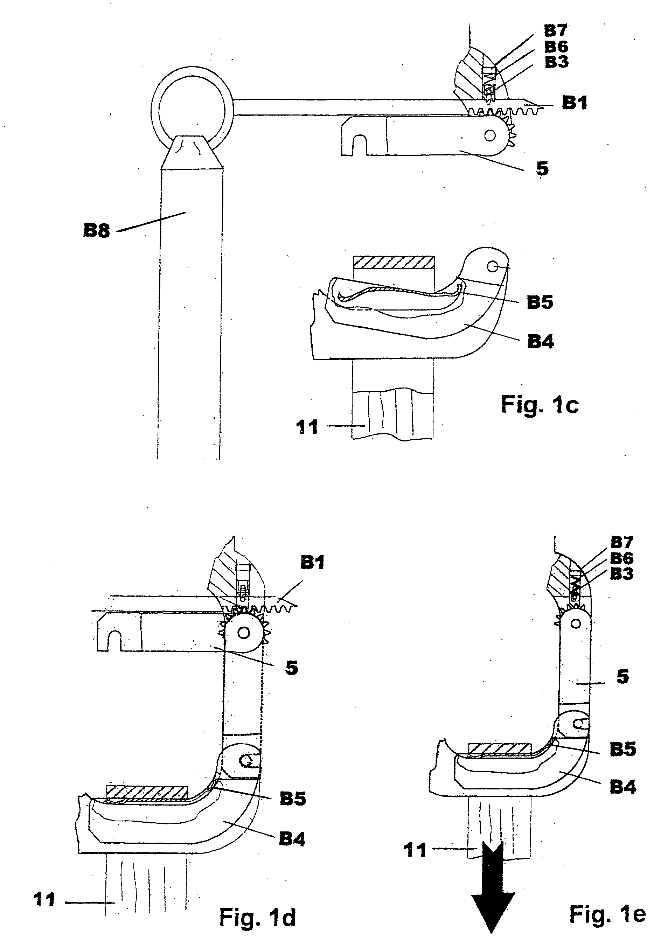

As shown in Figure 1, the karabiner of the invention, indicated as a whole by the number 1, comprises a shaped body or fixed body (2), advantageously produced in a single piece of light alloy (for instance, in high-resistance aluminum such as Ergal ® or Avional ®, or in steel) provided with an arched portion (2a) destined to accept an anchorage element (11) of the hooked-up subject, said element being for instance a tape or a looped element.

The fixed body (2) comprises a second arched portion (2b) that holds two protuberances of support on the inside surface (12a) and (12b) shaped in such a way that the mobile element (3) is locked in the vertical sense when held in place by the pin (4) but is free to rotate to the outside of the fixed body (2) once said pin (4) is removed.

The mobile element (3), connected to an anchorage element (14), is provided with hollows in the shape of arcs of circumference (3a) and (3b) (one of which (3b) is visible in Figure 1 section A-A), shaped in such a way as to receive the protuberances of complementary shape (12a) and (12b).

The pin (4) is constituted substantially by a regular cylindrical body able to slide freely inside the cavity that receives it and presents an elastic element (7) engaging at least one shaped groove, said elastic element acting to keep the pin (4) inside the fixed (2) and mobile (3) bodies in a not irreversible way to prevent accidental extraction. Said groove is shaped in such a way that once the rigidity and the dimensions of the elastic element (7) are defined, it is possible to establish the axial strength necessary to withdraw the pin in relation to the load applied by the anchorage elements (11) and (14).

The cavities in the fixed (2) and mobile (3) bodies that receives the pin (4) are of such shape and size as to reduce the load concentrations on the pin (4) to the minimum. In particular, the cross-section of the cavity of the mobile body (3) gives the inserted pin considerable play, with the result that the load applied on the pin is only transverse compared to the principal load and therefore the strength necessary to withdraw it can easily be exerted by the arm of the subject who is hooked up and suspended.

Figure 1 also shows all the elements which facilitate the gripping of the pin i.e. a ring (10) and a flexible prolongation element (8) connected in turn to a knob (9), which together facilitate the gripping and the extraction of the pin. The element (9) is advantageously constituted by a knob, a handle or some similar device.

The closing element (5) shown in Figure 1 as a simple swinging element fixed by a lock (6), can alternatively be shaped in a different manner when, for instance, it is desired to arrange additional safety mechanisms to avoid accidental opening and incomplete closure.

The rotation movements of the closing element (5) can be regulated by a keyed safety system, for instance, a possible form of which is shown in Figure 1b.

With particular reference to Figure 1 b, the karabiner could be endowed with a safety closure regulated by means of a key (B1) and an elastic element (or anti-closing fork) (B4).

According to a preferred embodiment and with reference to Figures 1c, 1d and 1e, the safety system comprises a closing element in the form of a finger (5) endowed in its upper part with a toothed portion having as center of rotation the center of the pivot of rotation of the same closing element, said toothed portion engaging with the safety key (B1) and allowing the extraction of said key only in position of complete closure.

In detail, inserting the key (B1) frees a blocking peg (or pin) (B3) that allows the rotation of the closing element (5) otherwise immobilized by said peg (B3).

The point of the key advantageously presents a wedge shape that allows the blocking peg (B3) to be lifted at the moment of insertion.

Preferably the face of the lower part of the blocking peg (B3) is endowed with suitable prominences to hold back the key (B1) in a non irreversible way when this is completely inserted and to hold back the toothed portion of the closing finger in an irreversible way in the absence of the key (B1).

The reversible blocking of the key (B1) is achieved by means of a tooth positioned in suitable manner on said key, which engages the blocking peg (B3), so that equal strength must be exerted to extract said key (B1) as is needed to shift said blocking peg.

According to a preferred embodiment, the blocking peg (B3) is driven toward the toothed portion of the closing finger by a spring (B6) that is in turn fixed by a grub-screw (B7) screwed into the stem of the karabiner. The blocking peg (B3) is maintained in the correct position by a transverse pin that fits into a through hole drilled in the stem of the karabiner.

The elastic elements (B4) and (B5) work in such a way as to prevent the rotation of the closing element (5) except when said elements are heavily loaded, i.e. only when the user is effectively hooked up and suspended.

Therefore the mechanism shown schematically by the elastic elements ( fork (B4) and spring (B5)) guarantees the user against incomplete closure, due to the fact that once the key (B1) is inserted, it can only be removed when the closing element (5) is in the closed position and that said position in turn can be engaged only when the elastic element (B4) is loaded.

As reported above, said spring (B5) is sufficiently resilient to prevent the fork (B4) being brought unintentionally into the lowered position when said elastic elements are not compressed by a considerable load, said load being at least in excess of what can be exerted by the strength of the hands alone. This arrangement prevents the karabiner and the closing element (5) in particular, from closing when the subject is not effectively connected to the karabiner through the anchorage element (11).

The key (B1) is preferably connected to an signaling element (B8) to warn the user of non-extraction of the key and of the fact that the closing element is still in the open position.

A tape in high-visibility color, for instance produced from durable materials, either woven or with steel thread reinforcing is usable as signaling element (8).

According to a further aspect the invention, the arched portion (2a) could be used as a point of attachment for further anchorage elements; in the case of para-gliding for instance, it is possible to connect another tape linked to the sail, so that the sail remains linked to the subject in the case of rapid release, even if it is not able to exert on him the force it exerted prior to release because of the different aspect assumed.

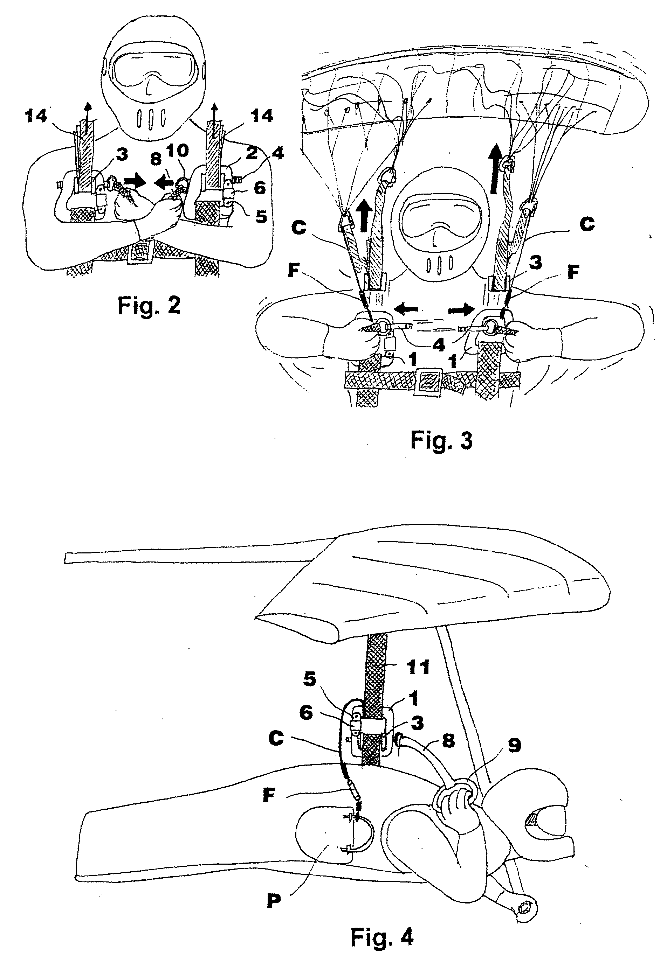

Figures 2, 3 and 4 show by way of example some examples of the invention in operation; in particular Figures 2 and 3 show how a subject connected to a parachute by means of two karabiners according to the invention can, in case of emergency in parachuting or para-gliding, free himself rapidly, by simply crossing the hands on the chest and extracting the pins with an instinctive and effective movement.

Figure 4 show an example of the use of the karabiner in hang-gliding; in this case the hooked-up and suspended subject, through only one karabiner for instance, is able to extract the pin by grabbing the handle that constitutes the grip, and pulling it with an axial movement with respect to his own body.

Figure 3 shows for instance how it is possible to maintain the para-glider linked to the suspended subject by means of a cable (C) connected via a flexible line (F) to the karabiner.

According to another method of employment, it is also possible to connect such cable (C) to the canopy of an emergency parachute in such a way as to cause its automatic extraction in case of release of the system of suspension.

Figure 4 shows an example of how the emergency parachute (P) connected to the tape solid with the system of suspension could be operated through a cable (C) and interposed flexible line (F) that breaks under the load necessary to extract the canopy of the parachute (P), releasing the pilot from the wing at the same time.

## Claims

1. Rapidly releasable safety karabiner **characterized by** comprising a fixed body and a mobile element hooked up to said fixed body by means of a transverse pin, shaped in such a way that the external forces applied to the karabiner are discharged almost completely onto support elements set on the fixed body, said support elements being constituted by two contact surfaces shaped in such a way as to create a constraining reaction substantially similar in magnitude and directed almost parallel to the applied load, with the effect of discharging only the remaining small component of the load onto the transverse pin, so generating sufficient effort to release the mobile part from the support surfaces once the transverse pin has been removed.

2. Karabiner according to Claim 1 **characterized by** comprising a shaped rigid body (2) having a lower portion (2a) defining a formation of attachment for an anchorage element (11), said formation of attachment being accessible through an opening of the body (2) equipped with a closing element (5) adjacent to said lower portion (2a), **characterized in that** two shaped protuberances of support (12a) and (12b) are defined in the arched upper part (2b) which bear against the mobile part (3), in turn connected to an anchorage element (14) and retained in position by means of a locking pin (4), said protuberances, of support constituting for (3) a support which is rigid and strong enough to bear a load at least equal to the maximum one standed by the anchorage elements (11) and (14).

3. Karabiner according to Claim 2 **characterized in that** the forces of traction exerted on the anchorage elements (11) and (14) are discharged almost completely onto the body (2) through two hollows shaped as arcs of circumference (3a) and (3b) present in the terminal parts of the mobile body (3) able to receive inside themselves two protuberances of complementary shape (12a) and (12b).

4. Karabiner according to Claim 3 **characterized in that** the profiles of the arcs of circumference (3a) and (3b) match the profiles of the protuberances (12a) and (12b) forming, in the presence of the pin (4), a lock resistant to both the forces applied in the longitudinal plane of the karabiner and to the transverse forces given rise to by the curved position assumed by the anchorage element (14) bearing on the arched upper part (2b) of the rigid body (2).

5. Karabiner according to Claim 3 **characterized in that** the profile of contact between the parts (3a) (12a) and (3b) (12b) is such as to allow rapid release of the mobile body (3) from the rigid body (2) by means of a small rotation in transverse sense with respect to the longitudinal plane of the karabiner at the moment of extraction of the pin (4).

6. Karabiner according to Claims from 2 to 5 **characterized in that** the safety pin (4) is inserted in the rigid (2) and mobile (3) bodies through a cavity sufficiently large to allow the same pin to slide easily even in the presence of heavy loads on the karabiner presenting a surface of contact that opposes only the transverse forces generated by the element of support (14) on the mobile body (3).

7. Karabiner according to Claims from 2 to 6 **characterized in that** the release of the mobile body (3) from the rigid body (2) is made possible only following to the complete extraction of the pin (4).

8. Karabiner according to Claim 2 **characterized in that** there is at least one elastic element (7) present on the pin (4 ) engaging at least one shaped groove, said elastic element acting to keep the pin (4) inside the rigid (2) and mobile (3) bodies in a not irreversible way, in order to prevent accidental extraction.

9. Karabiner according to Claim 2 **characterized in that** said pin (4) is connected to a handle shaped variously to facilitate the removal of the pin by the user.

10. Karabiner according to Claims from 2 to 9 **characterized in that** the insertion and the release of the anchorage element (11) are made possible without interfering with the parts that comprise the rapidly releasable mobile element (3).

11. Karabiner according to Claims from 1 to 10 **characterized by** comprising a safety system against accidental opening and against incomplete closure.

12. Karabiner according to Claim 11 **characterized in that** the safety system comprises a safety key (B1) engaging in a through hole (B2) and acting on a blocking pin (B3), said system being able to prevent both the opening of the closing element (5) without the key being inserted and the extraction of said key (B1) when the closing element (5) is in the open position.

13. Karabiner according to Claims 11 or 12 **characterized in that** the safety system comprises an interference element (B4) and an elastic element (B5) acting to prevent the opening and of closing of the closing element (5) when said elements (B4) and (B5) are not burdened by a considerable load, said load being at least in excess of what can be exerted with the strength of the hands alone.

14. Karabiner according to Claims from 11 to 13 **characterized in that** said closing element (5) is constituted by a finger endowed in its upper part with a toothed portion having as center of rotation the center of the pivot of rotation of the same closing element, said toothed portion engaging with the safety key (B1) and allowing the said key to be extracted only in position of complete closure.

15. Karabiner according to Claims from 12 to 14 **characterized in that** said safety key (B1) is equipped with a tooth that lifts a blocking pin (B3) in a not irreversible way.

16. Karabiner according to Claims from 12 to 15 **characterized in that** said safety key (B1) is equipped with a signaling element (B8) to warn the user of the non-extraction of said safety key.

17. Use of the karabiner according to any of the preceding Claims in the exercise of activities which make use of systems of hookup and suspension.
